# FASCICULE DE BREVET EUROPEEN

(11) **EP 3 285 118 B1**
(45) Date de publication et mention de la délivrance du brevet: **17.03.2021**
(21) Numéro de dépôt: 17192509.2
(22) Date de dépôt: 10.08.2016
(51) Int. Cl.: G03B 21/62, G02B 27/01, G02B 5/124, B29L 11/00, B29D 11/00, B29C 33/38, B29C 33/42, B29K 33/00, B29L 31/30

(54) **ECRAN MUNI DE MICROSTRUCTURES RÉTRORÉFLÉCHISSANTES**
BILDSCHIRM, DER MIT RÜCKSTRAHLENDEN MIKROSTRUKTUREN AUSGESTATTET IST
SCREEN PROVIDED WITH RETROREFLECTIVE MICROSTRUCTURES

(30) Priorité: 28.08.2015 FR 1558036
(43) Date de publication de la demande: 21.02.2018
(62) Demande divisionnaire de: 16183510.3
(73) Titulaire: Commissariat à l'Energie Atomique et aux Energies Alternatives, 75015 Paris (FR)
(72) Inventeur: MARTINEZ, Christophe, 38100 GRENOBLE (FR)
(74) Mandataire: Cabinet Beaumont

(56) Documents cités:
- WO-A1-98/59266
- WO-A1-2015/158999
- JP-A- 2006 145 881
- US-A1- 2012 140 325

## Description

### Domaine

La présente demande concerne le domaine des systèmes d'affichage d'images sur des surfaces transparentes telles que des parebrises de véhicules, notamment de véhicules automobiles. Elle vise plus particulièrement un écran muni de microstructures réfléchissantes adapté à un tel système, un procédé de réalisation d'un tel écran, et un moule pour la réalisation d'un tel écran.

### Exposé de l'art antérieur

La demanderesse a récemment proposé, dans la demande de brevet WO2015/158999, un système d'affichage d'une image sur un parebrise utilisant un écran partiellement transparent et partiellement rétroréfléchissant revêtant la face intérieure du parebrise.

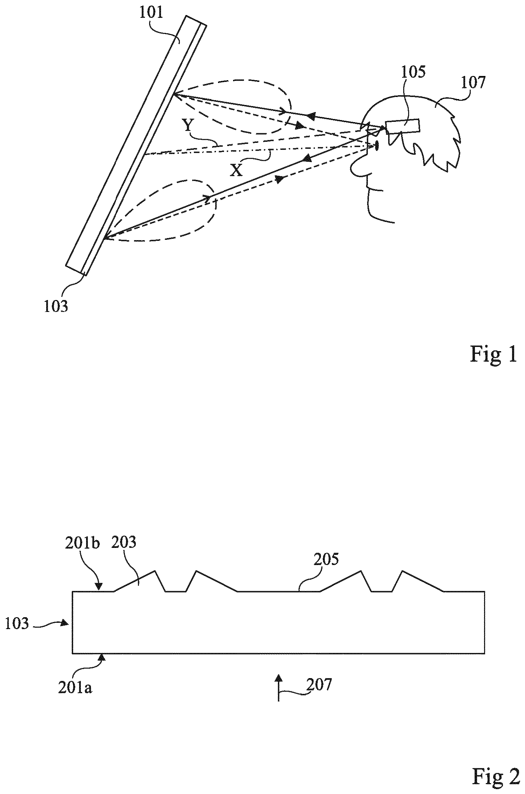

La figure 1 est une vue en coupe schématique d'un tel système. Ce système comprend un écran 103 revêtant la face intérieure d'un parebrise 101, c'est-à-dire sa face tournée vers l'intérieur du véhicule, et un projecteur 105 adapté à être monté sur la tête d'un utilisateur 107, par exemple le conducteur du véhicule. Le projecteur 105 est adapté à projeter une image sur tout ou partie de la surface de l'écran 103 tournée vers l'intérieur du véhicule (c'est-à-dire opposée au pare-brise 101). L'écran 103 est partiellement transparent et partiellement rétroréfléchissant. Plus particulièrement, l'écran 103 est adapté à rétroréfléchir - c'est-à-dire réfléchir en direction de sa source - de la lumière projetée sur sa face tournée vers l'intérieur du véhicule, et à laisser passer sans altération significative de la lumière provenant du pare-brise 101, c'est-à-dire de l'extérieur du véhicule. L'écran 103 a ainsi une fonction de transparence, permettant à l'utilisateur de voir la scène extérieure à travers le pare-brise 101 depuis l'intérieur du véhicule, et une fonction de rétroréflexion, permettant à l'utilisateur - dont les pupilles sont voisines du projecteur 105 - de voir, en superposition de la scène extérieure, une image produite par le projecteur 105.

La figure 2 est une vue en coupe représentant plus en détail l'écran 103 du système de la figure 1.

L'écran 103 est constitué d'un film en un matériau transparent dont une face 201a est approximativement lisse et dont une face 201b opposée à la face 201a présente des protubérances 203 sensiblement identiques régulièrement réparties sur la surface du film. Chaque protubérance 203 a sensiblement la forme d'un coin de cube, c'est-à-dire d'un trièdre comportant trois faces latérales triangulaires mutuellement perpendiculaires se rejoignant en un même point ou sommet, et, à l'opposé du sommet, une base, par exemple en forme de triangle équilatéral. Chaque protubérance 203 a son sommet pointant vers l'extérieur du film. Les bases des protubérances 203 sont parallèles à la face lisse 201a de l'écran, et l'axe central de chaque protubérance 203 (c'est-à-dire l'axe passant par le sommet du trièdre et par le centre de sa base) est orthogonal au plan moyen du film. Ainsi, les trois faces du trièdre sont obliques par rapport au plan moyen du film.

L'écran 103 se distingue d'un écran rétroréfléchissant à coins de cube traditionnel, en ce que, dans l'écran 103, les protubérances 203 ne sont pas adjacentes mais sont séparées les unes des autres par des zones sensiblement lisses 205 de la face 201b, parallèles ou approximativement parallèles à la face 201a de l'écran.

L'écran 103 est destiné à être éclairé par le projecteur 105 (figure 1) par sa face 201a, comme l'illustre schématiquement la flèche 207 de la figure 2. Les portions d'écran situées en regard des zones lisses 205 de la face 201a correspondent à des portions transparentes de l'écran 103, laissant passer la lumière dans les deux sens sans déformation significative. Les portions d'écran situées en regard des protubérances 203 correspondent quant à elles à des portions rétroréfléchissantes non transparentes de l'écran 103, adaptées à renvoyer en direction de sa source la lumière provenant du projecteur 105. Plus particulièrement, lorsqu'un faisceau lumineux incident (non représenté) atteint une portion rétroréfléchissante de l'écran 103, ce faisceau traverse une partie de l'épaisseur de l'écran jusqu'à atteindre la base du coin de cube 203 correspondant, pénètre dans le coin de cube, est réfléchi sur chacune des trois faces latérales du coin de cube, et, après réflexion sur la troisième face latérale, repart en direction de sa source. Dans l'exemple représenté, les réflexions sur les faces latérales des coins de cube sont basées sur le principe de la réflexion totale interne. A titre de variante, les faces latérales des coins de cube peuvent être recouvertes d'un matériau réfléchissant du côté de la face 201b de l'écran. Les réflexions sur les faces latérales des coins de cube sont alors des réflexions de type miroir.

Le document US2012/0140325 décrit un dispositif d'affichage utilisant une matrice de coins bi-réflecteurs optiques.

### Résumé

Le mode de réalisation selon la revendication 1 prévoit un écran rétroréfléchissant comportant un premier film en un matériau transparent dont une face comprend une pluralité de microprotubérances, chaque microprotubérance ayant une première face sensiblement parallèle au plan moyen de l'écran, et des deuxième et troisième faces sensiblement orthogonales entre elles et sensiblement orthogonales à la première face, les première, deuxième et troisième faces de la microprotubérance se rejoignant en un même point et formant un trièdre.

Selon ce mode de réalisation, les première, deuxième et troisième faces de chaque microprotubérance du premier film sont revêtues par une métallisation réfléchissante et la première face de chaque microprotubérance est parallèle au plan moyen de l'écran.

Selon un mode de réalisation, la face du premier film comprend en outre des bandes à flancs obliques ou incurvés, chaque microprotubérance étant accolée à l'une des bandes.

Selon un mode de réalisation, plusieurs microprotubérances du premier film sont accolées à une même bande.

Selon un mode de réalisation, le taux de recouvrement de l'écran par les microprotubérances du premier film est inférieur à 50 %.

Selon un mode de réalisation, la face du premier film comprend des microprotubérances de dimensions et/ou d'orientations différentes dans des zones différentes de l'écran.

Selon un mode de réalisation, les microprotubérances du premier film sont réparties selon une disposition aléatoire ou semi-aléatoire sur la surface de l'écran.

Un autre mode de réalisation prévoit un procédé de fabrication d'un écran rétroréfléchissant du type susmentionné, comprenant la fabrication d'un moule dont une face présente des structurations de formes complémentaires à celles des structurations de la face du premier film de l'écran.

Selon un mode de réalisation, la fabrication du moule comprend une étape de gravure de microrenfoncements du côté d'une première face d'un substrat, chaque microrenfoncement ayant un fond sensiblement parallèle au plan moyen de l'écran et des première et deuxième parois latérales sensiblement orthogonales entre elles et sensiblement orthogonales au fond, les première et deuxième parois latérales et le fond du microrenfoncement se rejoignant en un même point et formant un trièdre.

Selon un mode de réalisation, la fabrication du moule comprend en outre une étape de formation, du côté de la face du substrat, de tranchées à flancs obliques ou courbes, chaque microrenfoncement débouchant dans une tranchée.

Selon un mode de réalisation, le procédé comporte en outre une étape de réalisation, sur ladite face du premier film, de motifs complémentaires à ceux de ladite face du moule, par moulage à partir du moule.

### Brève description des dessins

Ces caractéristiques et leurs avantages, ainsi que d'autres, seront exposés en détail dans la description suivante de modes de réalisation particuliers faite à titre non limitatif en relation avec les figures jointes parmi lesquelles :
la figure 1, précédemment décrite, est une vue en coupe représentant de façon schématique un exemple d'un système d'affichage d'une image sur un parebrise ;
la figure 2, précédemment décrite, est une vue en coupe représentant plus en détail un écran du système de la figure 1 ;
les figures 3A, 4A, 5A, 6A, 7A, 8A et 9A sont des vues en perspective illustrant schématiquement des étapes successives d'un exemple de procédé de fabrication d'un mode de réalisation d'un écran muni de microstructures rétroréfléchissantes ; et
les figures 3B, 4B, 5B, 6B, 7B, 8B et 9B sont des vues en coupe des structures des figures 3A, 4A, 5A, 6A, 7A, 8A et 9A respectivement.

### Description détaillée

De mêmes éléments ont été désignés par de mêmes références aux différentes figures et, de plus, les diverses figures ne sont pas tracées à l'échelle. Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des vues en coupe correspondantes, étant entendu que, dans la pratique, les dispositifs décrits peuvent être orientés différemment. Sauf précision contraire, les expressions "approximativement", "environ", "sensiblement", et "de l'ordre de" signifient à 10 % près, de préférence à 1 % près, ou, lorsqu'il s'agit de valeurs angulaires ou assimilées (par exemple les qualificatifs d'orientation tels que les termes parallèle, orthogonal, vertical, horizontal, etc.) à 1 degré près, de préférence à 0,1° près.

Une limitation de l'écran 103 de la figure 2 est que son efficacité en rétroréflexion, très bonne pour des angles d'incidence du faisceau projeté voisins de la normale à l'écran, par exemple pour des angles d'incidence compris entre 0 et 20 degrés, chute fortement lorsque l'angle d'incidence du faisceau projeté augmente. A titre d'illustration, des mesures de l'intensité du faisceau rétroréfléchi ont été réalisées sur un écran du type décrit en relation avec la figure 2 pour différents angles du faisceau incident. Ces mesures montrent que l'intensité du faisceau rétroréfléchi est maximale pour un angle d'incidence nul (incidence normale), chute à environ 50 % de sa valeur maximale pour un angle d'incidence de 25°, et descend à 10 % de sa valeur maximale pour un angle d'incidence de 50°.

Ceci peut poser problème pour l'application à la projection d'une image sur un parebrise de véhicule. En effet, dans de nombreux véhicules, le parebrise est fortement incliné par rapport à la verticale. De plus, dans un système du type décrit en relation avec la figure 1, le projecteur 105 monté sur la tête de l'utilisateur peut avoir son axe principal de projection incliné vers le bas par rapport à l'horizontale. Ainsi, l'angle formé entre l'axe principal du projecteur 105 et l'écran 103 revêtant le parebrise peut atteindre des valeurs élevées, par exemple de l'ordre de 50 à 70 degrés. A de tels angles d'incidence, l'efficacité en rétroréflexion de l'écran 103 de la figure 2 est relativement faible.

Une autre limitation de l'écran 103 de la figure 2 réside dans sa grande complexité de fabrication, liée notamment au fait que les protubérances rétroréfléchissantes 203 présentent des faces obliques (par rapport au plan moyen de l'écran) dont les angles d'inclinaison doivent être contrôlés de façon très précise pour obtenir l'effet rétroréfléchissant recherché.

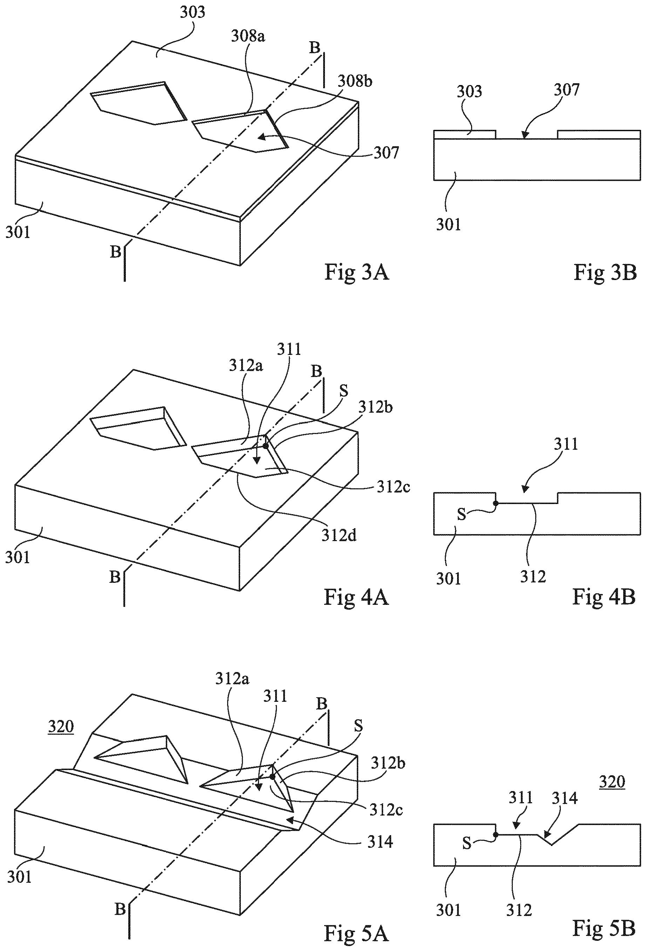

Les figures 3A, 3B, 4A, 4B, 5A, 5B, 6A, 6B, 7A, 7B, 8A, 8B, 9A et 9B illustrent schématiquement des étapes d'un procédé de fabrication d'un mode de réalisation d'un écran 400 muni de microstructures rétroréfléchissantes, compatible avec un système du type décrit en relation avec la figure 1. Les figures 3A, 4A, 5A, 6A, 7A, 8A et 9A sont des vues en perspective, et les figures 3B, 4B, 5B, 6B, 7B, 8B et 9B sont des vues en coupe selon le plan B-B des figures 3A, 4A, 5A, 6A, 7A, 8A et 9A respectivement.

Les figures 3A, 3B, 4A, 4B, 5A et 5B illustrent des étapes de fabrication d'un moule primaire 320 (figures 5A et 5B) destiné à être utilisé lors de la fabrication de l'écran 400 proprement dit.

Les figures 3A et 3B illustrent une étape de disposition d'un masque 303 sur la face supérieure d'un substrat 301 dans lequel on souhaite former le moule primaire 320. Le substrat 301 est par exemple en verre, en silicium, en un polymère thermoplastique tel que le poly(méthacrylate de méthyle) ou PMMA, ou en tout autre matériau adapté. La surface supérieure du substrat 301 est de préférence plane. Le masque 303 comprend des ouvertures traversantes 307 laissant apparaître des portions de la surface supérieure du substrat 301 destinées à être gravées lors d'une étape ultérieure. Le masque 303 est en un matériau adapté à protéger les portions non exposées du substrat 301 lors de l'étape ultérieure de gravure. A titre d'exemple, le masque 303 est en métal ou en résine. Vu de dessus, chaque ouverture 307 formée dans le masque 303 comprend deux parois latérales 308a et 308b sensiblement orthogonales entre elles, se rejoignant pour former un angle d'approximativement 90 degrés. Chaque ouverture 307 a par exemple, vu de dessus, la forme d'un pentagone convexe. Dans l'exemple représenté, chaque ouverture 307 a, vu de dessus, la forme d'un triangle isocèle rectangle auquel est juxtaposé un trapèze. Les côtés du triangle rectangle correspondent aux parois latérales 308a et 308b, et la base du triangle rectangle est confondue avec une base (la grande base dans l'exemple représenté) du trapèze. Les ouvertures 307 sont par exemple toutes sensiblement identiques et orientées sensiblement de la même manière. Dans l'exemple représenté, seules deux ouvertures 307 ont été représentées par souci de simplification. En pratique, un grand nombre d'ouvertures 307 peut être prévu. A titre d'exemple, les ouvertures 307 sont régulièrement réparties sur toute la surface supérieure du substrat 301. Les ouvertures 307 sont par exemple disposées en matrice selon des rangées et des colonnes.

Les figures 4A et 4B illustrent une étape de formation de cavités ou renfoncements 311 s'étendant sensiblement verticalement dans le substrat 301, depuis sa face supérieure, en regard des ouvertures 307 du masque 303. Chaque cavité 311 comprend des parois latérales sensiblement orthogonales à la face supérieure du substrat 301, et un fond sensiblement parallèle à la face supérieure du substrat. En particulier, chaque cavité comprend deux parois latérales 312a et 312b sensiblement orthogonales entre elles, coïncidant sensiblement, vu de dessus, avec les parois latérales 308a et 308b des ouvertures 307. Les parois latérales 312a et 312b et le fond 312c de chaque cavité 311 se rejoignent en un même point S, et définissent un trièdre trirectangle ou coin de cube ayant le point S pour sommet. Dans chaque cavité 311, l'axe de symétrie ou axe central du coin de cube de sommet S forme, par construction, un angle d'approximativement 54,74 degrés avec la face supérieure du substrat 301.

Comme cela sera expliqué plus en détail ci-après, dans chaque cavité 311, le coin de cube de sommet S correspond à un microrenfoncement rétroréfléchissant du futur écran 400. La paroi latérale 312d de chaque cavité 311 opposée au sommet S (correspondant à la petite base du trapèze de l'ouverture 307 dans l'exemple représenté) est de préférence relativement éloignée du sommet S, de façon à définir dans la cavité 311 une région de dégagement en regard de la base du coin de cube. A titre d'exemple, vu de dessus, la cavité 311 présente, dans la direction de la bissectrice de l'angle formé par les parois latérales 312a et 312b, une dimension comprise entre 1 et 1,5 fois la profondeur de la cavité. Les cavités 311 ont par exemple une profondeur comprise dans la plage allant de 20 à 500 µm et de préférence comprise dans la plage allant de 50 à 200 µm.

Les cavités 311 sont par exemple formées par un procédé de gravure réactive ionique profonde, généralement désigné dans la technique par l'acronyme anglo-saxon DRIE ("Deep Reactive Ion Etching"). Un tel procédé présente l'avantage de permettre de réaliser aisément des cavités ayant des faces latérales sensiblement verticales sur des profondeurs relativement élevées, et un fond sensiblement horizontal. Tout autre procédé de gravure adapté pourra cependant être utilisé, par exemple une gravure par laser ou une gravure par rayons X.

Une fois la gravure réalisée, le masque 303 (non représenté sur les figures 4A et 4B) est retiré.

Les figures 5A et 5B illustrent une étape de formation de tranchées ou évidements 314 à flancs obliques ou incurvés dans le substrat 301, depuis la face supérieure du substrat. Les tranchées 314 ont une profondeur inférieure à l'épaisseur du substrat 301. Les tranchées 314 traversent les régions de dégagement des cavités 311, en évitant les régions en coins de cube correspondant aux microrenfoncements rétroréfléchissants de l'écran 400. De préférence, une même tranchée 314 traverse plusieurs cavités 311. A titre d'exemple, vu de dessus, chaque tranchée 314 traverse de part en part le substrat 301 dans une direction d'alignement des cavités 311 ne passant pas par les portions en coins de cube des cavités 311. A titre de variante, une tranchée 314 localisée est formée au niveau de chaque cavité 311, c'est-à-dire que chaque tranchée 314 traverse une unique cavité 311.

Les tranchées 314 ont une profondeur supérieure ou égale à celle des cavités 311, par exemple une profondeur comprise entre 1 et 1,5 fois la profondeur des cavités 311. Les tranchées 314 présentent de préférence un plan de symétrie longitudinal sensiblement orthogonal à la surface supérieure du substrat. La profondeur des tranchées 314, leur largeur, et l'inclinaison de leurs flancs, sont choisies de façon à éliminer tout ou partie des parois verticales des cavités 311 qui ne correspondent pas aux régions rétroréfléchissantes en coins de cube de l'écran 400.

A titre d'exemple, les tranchées 314 sont des tranchées en V. Des tranchées en V peuvent par exemple être obtenues par usinage du substrat au moyen d'une scie, ou par gravure. Les tranchées en V ont par exemple une ouverture angulaire comprise entre 20 et 60 degrés, et de préférence de l'ordre de 50 degrés.

A titre de variante, les tranchées 314 sont des tranchées à flancs incurvés, par exemple des tranchées en C. De telles tranchées peuvent par exemple être réalisées par gravure.

La prévision des tranchées 314 permet de faciliter une étape ultérieure de démoulage d'un élément de l'écran 400 réalisé à partir du moule 320. On notera toutefois que les tranchées 314 sont optionnelles, et peuvent notamment être omises s'il ne se pose pas de difficulté particulière de démoulage lors de cette étape ultérieure. On notera en outre que l'angle d'inclinaison des flancs des tranchées 314 n'a pas besoin d'être précisément contrôlé, car les tranchées 314 servent uniquement à faciliter le démoulage de l'écran, mais n'ont pas de fonction optique dans l'écran final. La structure obtenue à l'issue des étapes 3A, 3B, 4A, 4B, 5A, 5B correspond au moule primaire 320.

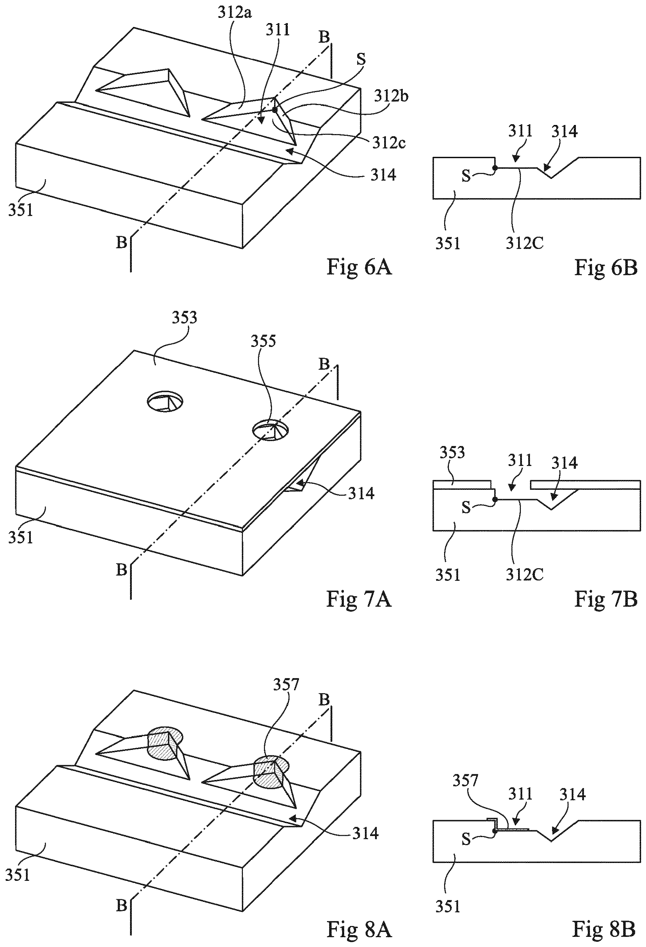

Les figures 6A et 6B illustrent une étape au cours de laquelle les structurations de la surface supérieure du moule primaire 320 sont répliquées, par moulage, sur une face (la face supérieure dans l'exemple représenté) d'un film 351. A titre d'exemple, le film 351 est en un matériau plastique, par exemple de type polyméthacrylate de méthyle. Dans cet exemple, le film 351 est en un matériau transparent. La réplication des motifs du moule primaire 320 sur une face du film 351, passe par la formation, à partir du moule primaire 320, d'un moule secondaire (non représenté) ayant une forme complémentaire de celle du moule primaire 320. Les structurations de la face supérieure du film 351 sont alors obtenues, à partir du moule secondaire, par thermoformage ou par toute autre technique de moulage adaptée. Par souci de simplification, dans la suite de la description, les références 311, 312a, 312b, 312c, 312d, S et 314 utilisées pour désigner des éléments des structurations de la face supérieure du moule primaire 320, seront utilisées pour désigner les éléments correspondants des structurations de la face supérieure du film 351. La face non structurée du film 351, à savoir sa face inférieure dans l'exemple représenté, est de préférence sensiblement plane.

Les figures 7A et 7B illustrent une étape de disposition d'un masque 353 sur la face supérieure du film 351. Le masque 353 comprend des ouvertures traversantes 355 laissant apparaître des portions de la face supérieure du film 351. Plus particulièrement, les ouvertures 355 sont disposées sensiblement en regard des coins de cube de sommet S correspondant aux microrenfoncements rétroréfléchissants de l'écran 400. Le reste de la surface supérieure du film 351, et notamment les portions planes de la surface supérieure du film 351 non occupées par les cavités 311 et les tranchées 314, ainsi que les portions de la surface supérieure du film 351 correspondant aux tranchées 314 et aux régions de dégagement des cavités 311, sont recouvertes par le masque 353.

Les figures 8A et 8B illustrent le résultat d'une étape de dépôt, au travers des ouvertures 355 du masque 353, de métallisations réfléchissantes 357 revêtant les parois latérales et le fond des microrenfoncements en coins de cube de la face supérieure du film 351. Les métallisations 357 sont par exemple en aluminium. Les métallisations 357 peuvent être déposées par pulvérisation au travers des ouvertures du masque. En pratique, les métallisations 357 peuvent déborder sur la face supérieure du film 351 légèrement au-delà de la limite des coins de cube de sommet S. A titre d'exemple, vu de dessus, chaque métallisation 357 peut avoir la forme d'une pastille sensiblement circulaire dans laquelle s'inscrit le triangle rectangle correspondant, vu de dessus, au renfoncement en coin de cube revêtu par la métallisation 357.

Une fois les métallisations 357 déposées, le masque 353 est retiré.

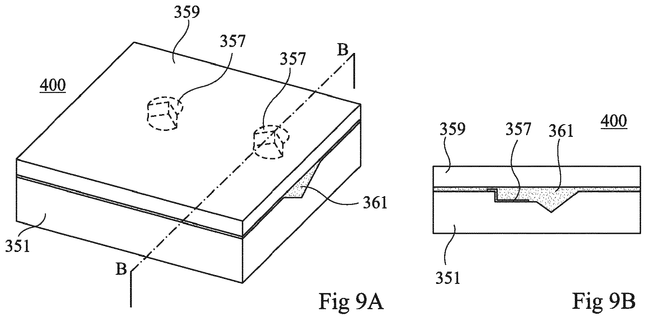

Les figures 9A et 9B illustrent une étape de collage d'un film de revêtement transparent 359 sur la face supérieure du film 351. Dans cet exemple, les faces du film 359 sont sensiblement planes. Une couche de colle transparente 361 comblant notamment les cavités 311 et les tranchées 314 de la face supérieure du film 351, fait interface entre la face supérieure du film 351 et la face inférieure du film 359. De préférence, le film de revêtement 359 et la colle transparente 361 ont sensiblement le même indice de réfraction que le film 351. Le film de revêtement 359 et la couche de colle transparente 361 permettent de garantir une bonne transparence de l'écran 400 en dehors des zones revêtues par les métallisations 357. L'assemblage ainsi obtenu forme l'écran 400.

L'écran 400 présente des portions rétroréfléchissantes régulièrement réparties sur toute sa surface, correspondant aux structurations en coins de cube métallisées du film 351. Chaque portion d'écran rétroréfléchissante est entourée par une portion d'écran transparente, de sorte que l'écran est partiellement rétroréfléchissant et partiellement transparent. L'écran 400 est ainsi adapté à un fonctionnement du type décrit en relation avec la figure 1 (la face supérieure de l'écran étant tournée vers le projecteur 105). Pour obtenir une bonne transparence de l'écran 400 permettant la visualisation d'une scène extérieure, le taux de recouvrement de l'écran 400 par les portions rétroréfléchissantes est par exemple inférieur à 50 %, et de préférence inférieur à 20 %.

Lorsqu'ils pénètrent dans l'écran 400 par la face supérieure du film 359, les rayons incidents sont déviés d'un angle qui dépend de l'indice optique du film 359. L'efficacité maximale en rétroréflexion des structurations en coin de cube de l'écran 400 est en principe obtenue lorsque les rayons projetés sur ces structurations sont parallèles à l'axe central des coins de cube de sommet S, c'est-à-dire lorsque les rayons se propageant à l'intérieur de l'écran sont inclinés d'environ 54,74 degrés par rapport au plan moyen de l'écran. Une telle inclinaison des rayons à l'intérieur de l'écran ne peut généralement pas être obtenue dans la pratique, cette inclinaison étant supérieure à l'angle limite de réfraction du dioptre supérieur de l'écran. A titre d'exemple, pour un film 359 d'indice optique de l'ordre de 1,5, l'angle limite de réfraction est d'environ 42 degrés. On notera en outre que plus l'angle d'incidence des rayons lumineux sur l'écran 400 est élevé, plus les pertes par réflexion sur la face supérieure de l'écran 400 sont importantes. En fonction des matériaux choisis, on pourra aisément trouver, par mesure et/ou simulation, l'angle d'incidence des rayons lumineux pour lequel l'efficacité en rétroréflexion de l'écran est maximale. A titre d'exemple, des mesures ont montré que, lorsque les films 359 et 351 et la couche de colle 361 ont un indice de réfraction de l'ordre de 1,5, l'efficacité maximale en rétroréflexion de l'écran 400 est obtenue pour un angle d'incidence (à l'extérieur de l'écran) de l'ordre de 60 degrés. Plus généralement, les essais réalisés montrent que la structure proposée procure une bonne efficacité en rétroréflexion pour des angles d'incidence compris dans la plage allant de 30 à 80 degrés, et de préférence dans la plage allant de 50 à 70 degrés. Ainsi, l'écran 400 est bien adapté à l'application à la projection d'une image sur un pare-brise de véhicule.

Un autre avantage de l'écran 400 est qu'il est relativement simple à réaliser, en raison du fait que les microrenfoncements en coins de cube formant les portions rétroréfléchissantes de l'écran ne comportent pas de faces obliques par rapport au plan moyen de l'écran. Les faces des microrenfoncements en coins de cube de l'écran 400 sont sensiblement orthogonales ou parallèles au plan moyen de l'écran. Ainsi, les microrenfoncements en coins de cube peuvent être obtenus au moyen d'une simple gravure à flancs verticaux depuis la surface supérieure du substrat 301.

Des modes de réalisation particuliers ont été décrits. Diverses variantes et modifications apparaîtront à l'homme de l'art. En particulier, les modes de réalisation décrits ne se limitent pas à l'exemple susmentionné dans lequel les microrenfoncements en coins de cube formant les portions rétroréfléchissantes de l'écran 400 sont sensiblement identiques et orientés de la même manière. En pratique, selon les besoins de l'application, des microrenfoncements en coins de cube peuvent avoir des dimensions différentes et/ou des orientations différentes (en vue de dessus) dans des zones différentes de l'écran.

En outre, les microrenfoncements en coins de cube formant les portions rétroréfléchissantes de l'écran 400 ne sont pas nécessairement alignés en lignes et en colonnes, mais peuvent présenter une disposition aléatoire ou semi-aléatoire sur la surface de l'écran, de façon notamment à éviter d'éventuels phénomènes diffractifs susceptibles de se produire sous certains angles d'incidence lorsque les microrenfoncements ont une disposition régulière.

De plus, les modes de réalisation décrits ne se limitent pas à l'exemple de procédé de réalisation des métallisations réfléchissantes 357 décrit en relation avec les figures 7A, 7B, 8A, 8B. A titre de variante, l'étape de réalisation du masque 353 décrite en relation avec les figures 7A et 7B peut être omise. A la place, une couche métallique conforme revêtant toute la surface supérieure de la structure des figures 6A et 6B peut être réalisée. Le métal déposé peut ensuite être retiré au niveau des régions planes supérieures de la structure (correspondant aux zones transparentes de l'écran), par exemple par polissage mécano-chimique. Lors de cette étape, seules les portions de la couche métallique revêtant les parois des cavités 311, et, le cas échéant, des tranchées 314, sont conservées, formant les métallisations réfléchissantes 357.

Par ailleurs, on notera que dans une application du type décrit en relation avec la figure 1, la source lumineuse 105 n'est généralement pas placée exactement dans l'axe du regard de l'utilisateur. Ainsi, l'écran 400 doit de préférence être adapté à diffuser la lumière rétroréfléchie dans un cône de diffusion englobant les pupilles de l'utilisateur, pour que l'utilisateur puisse voir l'image affichée par le projecteur. En pratique, les inventeurs ont constaté que les effets de diffraction sur les bords des microrenfoncements et/ou les inévitables imperfections de surface de l'écran, peuvent suffire à obtenir l'effet de diffusion requis. Pour amplifier et/ou contrôler cette diffusion, on peut par exemple jouer sur la rugosité des flancs et du fond des cavités 311 du moule primaire 320.

En outre, les modes de réalisation décrits ne se limitent pas à l'application à la projection d'une image sur une surface transparente. En particulier, les modes de réalisation décrits peuvent avoir des applications dans divers domaines utilisant des surfaces rétroréfléchissantes, non nécessairement transparentes, par exemple à des fins de signalisation. Dans certains cas, il peut en effet être souhaitable de pouvoir disposer d'une surface présentant une bonne efficacité en rétroréflexion pour des angles d'incidences élevés. A titre d'exemple, une telle surface peut avoir une utilité pour des applications de signalisation au sol dans le domaine des routes pour véhicules automobiles. Dans le cas où la transparence n'est pas recherchée, on cherchera de préférence à maximiser le taux de recouvrement de l'écran par les portions rétroréfléchissantes en coins de cube. En outre, le matériau du film 351 pourra être non transparent. Le film de revêtement 359 et la couche de colle intermédiaire 361 doivent en revanche être transparents pour permettre à la lumière incidente d'atteindre les métallisations en coins de cube 357 puis de ressortir de l'écran après réflexion sur les faces des métallisations. A titre de variante, le film de revêtement 359 et la couche de colle intermédiaire 361 peuvent être omis. Par ailleurs, si la transparence de l'écran n'est pas requise, les métallisations réfléchissantes 357 ne sont pas nécessairement localisées sur les portions en coin de cube du substrat 351, mais peuvent former une couche continue réalisée par dépôt conforme, revêtant toute la surface supérieure du substrat 351.

On notera que dans la présente description, le terme film a été employé pour désigner les éléments 351 et 359 de l'écran 400. Ce terme doit toutefois s'entendre de façon large, et inclut notamment des éléments similaires à des films tels que des feuilles, plaques, etc.

Par ailleurs, à titre de variante, au lieu de répliquer à l'identique les structurations de la surface du moule primaire 320 (figures 5A, 5B) sur la face supérieure du film 351 (figures 6A et 6B), des structurations de formes complémentaires à celles du moule primaire 320 peuvent être formées sur la face supérieure du film 351. Autrement dit, plutôt que de former un moule secondaire à partir du moule primaire 320 puis de mouler la face supérieure du film 351 à partir du moule secondaire, la face supérieure du film transparent 351 peut être moulée directement à partir du moule primaire 320. Dans ce cas, on obtient des microprotubérances en coins de cube du côté de la face supérieure du film 351. Le film 351 forme alors un écran rétroréfléchissant destiné, comme dans l'exemple de la figure 2, à être éclairé par sa face inférieure. Lorsqu'un faisceau lumineux incident (non représenté) atteint une portion rétroréfléchissante de l'écran, ce faisceau traverse une partie de l'épaisseur de l'écran jusqu'à atteindre la base de la protubérance en coins de cube correspondante, pénètre dans le coin de cube, est réfléchi sur chacune des trois faces latérales du coin de cube, et, après réflexion sur la troisième face latérale, repart en direction de sa source. Les réflexions sur les faces latérales des coins de cube peuvent être basées sur le principe de la réflexion totale interne. A titre de variante, les faces latérales des coins de cube peuvent être recouvertes d'un matériau réfléchissant du côté de la face supérieure de l'écran, les réflexions sur les faces latérales des coins de cube étant alors des réflexions de type miroir.

## Revendications

1. Ecran rétroréfléchissant comportant un premier film (351) en un matériau transparent dont une face comprend une pluralité de microprotubérances, chaque microprotubérance ayant une première face, et des deuxième et troisième faces sensiblement orthogonales entre elles et sensiblement orthogonales à la première face, les première, deuxième et troisième faces de la microprotubérance se rejoignant en un même point et formant un trièdre,
dans lequel, les première, deuxième et troisième faces de chaque microprotubérance du premier film (351) sont revêtues par une métallisation réfléchissante,
**caractérisé en ce que** la première face de chaque microprotubérance est parallèle au plan moyen de l'écran.

2. Ecran selon la revendication 1, dans lequel ladite face du premier film (351) comprend en outre des bandes à flancs obliques ou incurvés, chaque microprotubérance étant accolée à l'une des bandes.

3. Ecran selon la revendication 2, dans lequel plusieurs microprotubérances du premier film (351) sont accolées à une même bande.

4. Ecran selon l'une quelconque des revendications 1 à 3, dans lequel le taux de recouvrement de l'écran par les microprotubérances du premier film (351) est inférieur à 50 %.

5. Ecran selon l'une quelconque des revendications 1 à 4, dans lequel ladite face du premier film (351) comprend des microprotubérances de dimensions et/ou d'orientations différentes dans des zones différentes de l'écran.

6. Ecran selon l'une quelconque des revendications 1 à 5, dans lequel les microprotubérances du premier film (351) sont réparties selon une disposition aléatoire ou semi-aléatoire sur la surface de l'écran.

7. Procédé de fabrication d'un écran rétroréfléchissant selon l'une quelconque des revendications 1 à 6, comprenant la fabrication d'un moule (320) dont une face présente des structurations de formes complémentaires à celles des structurations de ladite face du premier film (351) de l'écran (400), le procédé comportant en outre :
une étape de réalisation, sur ladite face du premier film (351), de motifs complémentaires à ceux de ladite face du moule (320), par moulage à partir du moule (320) ; et
une étape de formation d'une métallisation réfléchissante sur les première, deuxième et troisième faces de chaque microprotubérance du premier film (351).

8. Procédé selon la revendication 7, dans lequel la fabrication du moule (320) comprend une étape de gravure de microrenfoncements (311) du côté d'une première face d'un substrat (301), chaque microrenfoncement (311) ayant un fond (312c) sensiblement parallèle au plan moyen de l'écran (400) et des première (312a) et deuxième (312b) parois latérales sensiblement orthogonales entre elles et sensiblement orthogonales au fond (312c), les première (312a) et deuxième (312b) parois latérales et le fond (312c) du microrenfoncement (311) se rejoignant en un même point (S) et formant un trièdre.

9. Procédé selon la revendication 8, dans lequel la fabrication du moule (320) comprend en outre une étape de formation, du côté de ladite face du substrat (301), de tranchées (314) à flancs obliques ou courbes, chaque microrenfoncement (311) débouchant dans une tranchée (314).

## Patentansprüche

1. Retroreflektierender Schirm, der eine erste Folie (351) aufweist, der aus einem transparenten Material hergestellt ist und eine Oberfläche hat, die eine Vielzahl von Mikrovorsprüngen umfasst, wobei jeder Mikrovorsprung eine erste Oberfläche sowie eine zweite und eine dritte Oberfläche aufweist, die im Wesentlichen orthogonal zueinander und im Wesentlichen orthogonal zu der ersten Oberfläche sind, wobei die erste, die zweite und die dritte Oberfläche der Mikrovorsprünge an einem gleichen Punkt zusammenlaufen und einen Trieder bzw. Dreiflächner bilden,
wobei die erste, die zweite und die dritte Oberfläche jedes Mikrovorsprungs der ersten Folie (351) mit einer reflektierenden Metallisierung beschichtet sind
**dadurch gekennzeichnet, dass** die erste Oberfläche jedes Mikrovorsprungs parallel zu einer Mittelebene des Schirms ist.

2. Retroreflektierender Schirm nach Anspruch 1, wobei die Oberfläche der ersten Folie (351) ferner Streifen mit schrägen oder gekrümmten Seiten aufweist, wobei jeder Mikrovorsprung an einen der Streifen angefügt ist.

3. Retroreflektierender Schirm nach Anspruch 2, wobei eine Vielzahl von Mikrovorsprüngen der ersten Folie (351) an einen gleichen Streifen angefügt ist.

4. Retroreflektierender Schirm nach einem der Ansprüche 1 bis 3, wobei das Maß der Abdeckung der Schirmoberfläche durch die Mikrovorsprünge der ersten Folie (351) weniger als 50 % beträgt.

5. Retroreflektierender Schirm nach einem der Ansprüche 1 bis 4, wobei die Oberfläche der ersten Folie (351) Mikrovorsprünge mit unterschiedlichen Abmessungen und/oder Ausrichtungen in unterschiedlichen Bereichen des Schirms aufweist.

6. Retroreflektierender Schirm nach einem der Ansprüche 1 bis 5, wobei die Mikrovorsprünge der ersten Folie (351) gemäß einer zufälligen oder halbzufälligen Anordnung über die Oberfläche des Schirms verteilt sind.

7. Verfahren zur Herstellung des retroreflektierenden Schirms nach einem der Ansprüche 1 bis 6, wobei das Verfahren die Herstellung einer Form (320) mit einer Oberfläche aufweist, die Strukturen zeigt, die eine Form haben, die komplementär zu der der Strukturen der Oberfläche der ersten Folie (351) des Schirms ist, wobei das Verfahren weiterhin aufweist:
- einen Schritt zum Ausbilden von Mustern auf der Oberfläche der ersten Folie (351), die komplementär zu denen der Oberfläche der Form (320) sind, durch Abformen aus der Form (320); und
- einen Schritt zum Ausbilden einer reflektierenden Metallisierung auf der ersten, zweiten und dritten Oberfläche jedes Mikrovorsprungs der ersten Folie (351).

8. Verfahren nach Anspruch 7, wobei die Herstellung der Form (320) einen Schritt des Ätzens von Mikrovertiefungen (311) auf der Seite einer ersten Oberfläche eines Substrats (301) aufweist, wobei jede Mikrovertiefung (311) einen Boden (312c), der im Wesentlichen parallel zur Mittelebene des Schirms (400) verläuft, und erste (312a) und zweite (312b) seitliche Abschnitte aufweist, die im Wesentlichen orthogonal zueinander und im Wesentlichen orthogonal zum Boden (312c) verlaufen, wobei die ersten (312a) und zweiten (312b) seitlichen Wände und der Boden (312c) der Mikrovertiefung (311) an einem gleichen Punkt (S) zusammenlaufen und einen Trieder bzw. Dreiflächner bilden.

9. Verfahren nach Anspruch 8, wobei die Herstellung der Form (320) ferner einen Schritt des Ausbildens von Gräben (314) mit schrägen oder gekrümmten Seiten auf der Seite der Oberfläche des Substrats (301) aufweist, wobei jede Mikrovertiefung (311) in einen Graben (314) mündet.

## Claims

1. A retroreflective screen comprising a first film (351) made of a transparent material, having a surface comprising a plurality of microprotrusions, each microprotrusion having a first surface, and second and third surfaces substantially orthogonal to each other and substantially orthogonal to the first surface, the first, second, and third surfaces of the microprotrusions joining at a same point and forming a trihedron,
wherein the first, second, and third surfaces of each microprotrusion of the first film (351) are coated with a reflective metallization,
**characterized in that** the first surface of each microprotrusion is parallel to the mean plane of the screen.

2. The retroreflective screen of claim 1, wherein said surface of the first film (351) further comprises strips with oblique or curved sides, each microprotrusion being placed against one of the strips.

3. The retroreflective screen of claim 2, wherein a plurality of microprotrusions of the first film (351) are placed against a same strip.

4. The retroreflective screen of any of claims 1 to 3, wherein the screen surface coverage by the microprotrusions of the first film (351) is lower than 50%.

5. The retroreflective screen of any of claims 1 to 4, wherein the surface of the first film (351) comprises microprotrusions having different dimensions and/or orientations in different screen areas.

6. The retroreflective screen of any of claims 1 to 5, wherein the microprotrusions of the first film (351) are distributed according to a random or semi-random layout across the screen surface.

7. A method of manufacturing the retroreflective screen of any of claims 1 to 6, comprising manufacturing a mold (320) having a surface exhibiting structures having shape complementary to that of the structures of said surface of the first film (351) of the screen, the method further comprising:
- a step of forming, on said surface of the first film (351), patterns which are complementary to those of said surface of the mold (320), by molding from said mold (320); and
- a step of forming a reflecting metallization on the first, second and third surfaces of each microprotrusion of the first film (351).

8. The method of claim 7, wherein the manufacturing of the mold (320) comprises a step of etching microrecesses (311) on the side of a first surface of a substrate (301), each microrecess (311) having a bottom (312c) substantially parallel to the mean plane of the screen (400) and first (312a) and second (312b) lateral portions substantially orthogonal to each other and substantially orthogonal to the bottom (312c), the first (312a) and second (312b) lateral walls and the bottom (312c) of the microrecess (311) joining at a same point (S) and forming a trihedron.

9. The method of claim 8, wherein the manufacturing of the mold (320) further comprises a step of forming, on the side of said surface of the substrate (301), trenches (314) with oblique or curved sides, each microrecess (311) emerging into a trench (314).
